# EUROPEAN PATENT APPLICATION

(11) **EP 4 576 129 A1**
(43) Date of publication of application: **25.06.2025**
(21) Application number: 23895921.7
(22) Date of filing: 12.06.2023
(51) Int. Cl.: H01F 1/057, H01F 41/02

(54) **MAGNETIC STEEL CONTAINING HIGH-ABUNDANCE RARE EARTH ELEMENTS, PREPARATION METHOD THEREFOR, AND USE THEREOF**

(30) Priority: 30.11.2022 CN 202211529210
(71) Applicant: FUJIAN GOLDEN DRAGON RARE-EARTH Co., Ltd., Fujian 366300 (CN)
(72) Inventor: WANG, Jinlei, Longyan, Fujian 366300 (CN); LIAO, Shicong, Longyan, Fujian 366300 (CN); HUANG, Jiaying, Longyan, Fujian 366300 (CN); FU, Gang, Longyan, Fujian 366300 (CN)
(74) Representative: Stöckeler, Ferdinand
(86) International application number: PCT/CN2023/099753
(87) International publication number: WO 2024/113756

(57) **Abstract**

The invention discloses a magnetic steel containing high-abundance rare earth elements, the preparation method therefor and use thereof. A main phase of the magnetic steel containing high-abundance rare earth elements comprises a main phase center, a main phase outer layer and a main phase epitaxial layer; the main phase outer layer is located on an outer side of the main phase center and completely covers the main phase center; the main phase epitaxial layer is located on an outer side of the main phase outer layer and completely covers the main phase outer layer; wherein a content of a high-abundance rare earth element RE₁ in the main phase center is A₁ at%; a content of a high-abundance rare earth element RE₂ in the main phase outer layer is A₂ at%; A₁ at% > A₂ at%; the main phase center has an average diameter of r₁, and the main phase outer layer has an average thickness of r₂, 1 <r₁/r₂ < 5; the main phase epitaxial layer comprises a heavy rare earth element RH; and the main phase epitaxial layer has an average thickness of r₃, 2nm<r₃<500nm. The present invention improves the magnetic properties of a magnet containing high-abundance rare earth by constructing a composite magnetic hardening shell layer.

## Description

### FIELD OF THE INVENTION

The invention relates to a magnetic steel containing high-abundance rare earth elements, the preparation method therefor and use thereof.

### BACKGROUND OF THE INVENTION

Neodymium-iron-boron permanent magnet materials are widely used in electronic products, automobiles, wind power, home appliances, elevators and industrial robots due to their excellent magnetic properties. For example, they provide magnetic fields in permanent magnet motors such as focusing motors, drive motors, wind turbines, elevator traction machines, and positioning motors. The demand for neodymium-iron-boron permanent magnet materials is increasing, among which the demand for Pr/Nd/Dy/Tb is increasing significantly. At the same time, high-abundance rare earths and other rare earths are largely shelved, resulting in waste.

However, adding high-abundance rare earth elements such as La, Ce, Y, Er, Yb, Gd or Sm to neodymium-iron-boron permanent magnet materials will reduce the magnetic properties of the permanent magnet materials, which limits the application of high-abundance rare earth elements such as La, Ce, Y, Er, Yb, Gd or Sm in permanent magnet materials.

### SUMMARY OF THE INVENTION

Mainly to overcome the defect in the prior art that the use of high-abundance rare earth elements cannot effectively improve the coercive force and maintain the remanence, the present invention provides a magnetic steel containing high-abundance rare earth elements, the preparation method therefor and use thereof. The present invention makes full use of the HA of La/Ce/Y/Er/Yb/Gd/Sm, Pr/Nd/Ho/Dy, and Dy/Tb by constructing a composite magnetic hardening shell layer, thereby improving the magnetic properties of magnets containing high -abundance rare earths.

The present invention solves the above technical problems mainly through the following technical solutions.

A first technical solution of the invention provides a magnetic steel containing high-abundance rare earth elements, wherein a main phase of the magnetic steel containing high-abundance rare earth elements comprises a main phase center, a main phase outer layer and a main phase epitaxial layer; the main phase outer layer is located on an outer side of the main phase center and completely covers the main phase center; the main phase epitaxial layer is located on an outer side of the main phase outer layer and completely covers the main phase outer layer;
wherein a content of a high-abundance rare earth element RE₁ in the main phase center is A₁ at%, wherein at% refers to an atomic percentage of the high-abundance rare earth element in the main phase center in the magnetic steel containing high-abundance rare earth elements;
a content of a high-abundance rare earth element RE₂ in the main phase outer layer is A₂ at%, wherein at% refers to an atomic percentage of the high-abundance rare earth element in the main phase outer layer in the magnetic steel containing high-abundance rare earth elements;
A₁ at% > A₂ at%;
wherein the main phase center has an average diameter of r₁, and the main phase outer layer has an average thickness of r₂, 1 <r₁/r₂ < 5;
wherein the main phase epitaxial layer comprises a heavy rare earth element RH; and the main phase epitaxial layer has an average thickness of r₃, 2nm<r₃<500nm.

In the present invention, the main phase center may comprise a light rare earth element RL₁, and the light rare earth element RL₁ comprises a high-abundance rare earth element RE₁.

In the main phase center, the light rare earth element RL₁ preferably comprises Pr and/or Nd. The atomic percentage of the light rare earth element RL₁ is preferably 9.0 at%-10.0 at%, for example, 9.63 at%.

In the main phase center, the atomic percentage of the high-abundance rare earth element RE₁ is preferably 0.5 at%-3.0 at%, more preferably 2.0 at%-3.0 at%, for example 2.69 at%.

In the present invention, the main phase outer layer may comprise a light rare earth element RL₂, and the light rare earth element RL₂ comprises a high-abundance rare earth element RE₂.

In the main phase outer layer, the light rare earth element RL₂ preferably comprises Pr and/or Nd. The atomic percentage of the light rare earth element RL₂ is preferably 9.0 at%-10.0 at%, such as 9.91 at%.

In the present invention, the high-abundance rare earth element RE₁ in the main phase center and the high-abundance rare earth element RE₂ in the main phase outer layer can independently comprise one or more of La, Ce, Y, Er, Yb, Gd, Tm and Sm; preferably comprise Y, Yb, Gd, Tm or Sm.

In the present invention, the atomic percentage of the high-abundance rare earth element RE₂ in the main phase outer layer is preferably 0.5 at%-3.0 at%, more preferably 2.0 at%-3.0 at%, for example 2.28 at%.

In the present invention, the average diameter of the main phase is R, preferably, 2µm<R<15µm.

In the present invention, the average diameter of the main phase center is r₁, the average thickness of the main phase outer layer is r₂, and r1/r2 is preferably 2-4, for example, 3.

In the present invention, the average thickness of the main phase epitaxial layer is r₃, and r₃ is preferably 100-400nm, for example, 200-300nm.

In the main phase epitaxial layer, the heavy rare earth element RH preferably comprises Dy and/or Tb.

In the main phase epitaxial layer, the content of the heavy rare earth element RH is preferably 2.5 wt%; the percentage refers to the mass percentage of the heavy rare earth element RH in the magnetic steel containing high-abundance rare earth elements.

In the present invention, the magnetic steel containing high-abundance rare earth elements generally further comprises a grain boundary phase. The grain boundary phase can be conventional in the art. Preferably, the grain boundary phase comprises elements such as Fe, Al, Cu, Ga, Zr, Ti, and B.

In the present invention, the anisotropy fields of the main phase epitaxial layer, the main phase center and the main phase outer layer decrease in sequence.

A second technical solution of the invention provides a magnetic steel containing high-abundance rare earth elements, wherein the magnetic steel containing high-abundance rare earth elements comprises a sintered body raw material composition and a diffusion source raw material composition,
wherein the sintered body raw material composition comprises the following components in atomic percentage of:
RE: 0.65-3.6 at%; RE is a high-abundance rare earth element, comprising one or more of La, Ce, Y, Er, Yb, Gd, Tm and Sm;
RL: 10-12.7 at%; RL is a light rare earth element, comprising Pr and/or Nd;
Fe: 78-80 at%;
M₁: 0.7-0.9 at%; M₁ comprises one or more of Al, Cu and Ga;
N: 0.4-0.6 at%; N comprises Zr and/or Ti;
B: 5.5-6.5 at%.

In the present invention, the sintered body raw material composition may further comprise RH. The RH is a heavy rare earth element, preferably including Dy and/or Tb. The atomic percentage of the RH may be 0-0.1 at% excluding 0 at%, for example, 0.05 at%.

In the present invention, in the sintered body raw material composition, the atomic percentage of the RE is preferably 0.7-3.55 at%, such as 0.702 at%, 1.404 at%, 2.106 at% or 3.51 at%.

When the RE comprises Y, the atomic percentage of Y may be 0.7-3.51 at%, such as 0.702 at%, 1.404 at%, 2.106 at% or 3.51 at%.

When the RE comprises Gd, the atomic percentage of Gd may be 1.0-3.55 at%, such as 1.404 at% or 3.51 at%.

When the RE comprises Yb, Tm, Sm or Er, the atomic percentage of the Yb, Tm, Sm or Er may be independently 3-3.55 at%, such as 3.51 at%.

The RE preferably comprises Y, Yb, Er, Gd, Tm or Sm.

In the present invention, in the sintered body raw material composition, the atomic percentage of the RL is preferably 10.5-12.65 at%, such as 10.53 at%, 11.232 at% or 12.636 at%.

When the RL comprises Pr, the atomic percentage of Pr may be 0.15-0.25 at%, such as 0.18 at%, 0.2 at% or 0.22 at%.

When the RL comprises Nd, the atomic percentage of Nd may be 0.5-0.7 at%, such as 0.57 at%, 0.6 at% or 0.68 at%.

The RL preferably comprises Pr and Nd.

The RL more preferably comprises 0.18 at% Pr and 0.57 at% Nd, or, more preferably comprises 0.2 at% Pr and 0.6 at% Nd, or, more preferably comprises 0.22 at% Pr and 0.68 at% Nd.

In the present invention, in the sintered body raw material composition, the atomic percentage of Fe is preferably 78.5-79.5 at%, such as 78.88 at% or 79.48 at%.

In the present invention, in the sintered body raw material composition, the atomic percentage of M₁ is preferably 0.75-0.85 at%, such as 0.8 at%.

When the M₁ comprises Al, the atomic percentage of the Al may be 0.2-0.3 at%, for example, 0.24 at%.

When the M₁ comprises Cu, the atomic percentage of Cu may be 0.15-0.25 at %, for example, 0.2 at %.

When the M₁ comprises Ga, the atomic percentage of Ga may be 0.3-0.4 at%, such as 0.36 at%.

The M₁ preferably comprises Al, Cu and Ga.

The M₁ more preferably comprises 0.24 at% Al, 0.2 at% Cu and 0.36 at% Ga.

In the present invention, in the sintered body raw material composition, the atomic percentage of N is preferably 0.45-0.55 at%, such as 0.53 at%.

When the N comprises Zr, the atomic percentage of Zr may be 0.2-0.3 at%, such as 0.26 at%.

When the N comprises Ti, the atomic percentage of the Ti may be 0.2-0.3 at%, such as 0.27 at%.

The N preferably comprises Zr and Ti.

The N more preferably comprises 0.26 at% Zr and 0.27 at% Ti.

In the present invention, in the sintered body raw material composition, the atomic percentage of B is preferably 5.5-6.0 at%, such as 5.75 at%.

In the present invention, the sintered body raw material composition is preferably:
(Y_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Y_{0.1}Pr_{0.22}Nd_{0.68})_{14.04}Fe_{79.48}Al_{0.24}Cu_{0.2}Ga_{0.36}Zr_{0.26}Ti_{0.27}B_{5.75}; or
(Yb_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Tm_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Gd_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Sm_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Er_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Yb_{0.1}Pr_{0.22}Nd_{0.68})_{14.04}Fe78_{.88}Al_{0.24}Cu_{0.2}Ga_{0.36}Zr_{0.26}Ti_{0.27}B_{5.75}; or
(Tm_{0.1}Pr_{0.22}Nd_{0.68})_{14.04}Fe_{78.88}Al_{0.24}Cu_{0.2}Ga_{0.36}Zr_{0.26}Ti_{0.27}B_{5.75}; or
(Gd_{0.1}Pr_{0.22}Nd_{0.68})_{14.04}Fe_{78.88}Al_{0.24}Cu_{0.2}Ga_{0.36}Zr_{0.26}Ti_{0.27}B_{5.75}; or
(Sm_{0.1}Pr_{0.22}Nd_{0.68})_{14.04}Fe_{78.88}Al_{0.24}Cu_{0.2}Ga_{0.36}Zr_{0.26}Ti_{0.27}B_{5.75}; or
(Er_{0.1}Pr_{0.22}Nd_{0.68})_{14.04}Fe_{78.88}Al_{0.24}Cu_{0.2}Ga_{0.36}Zr_{0.26}Ti_{0.27}B_{5.75}.

In the present invention, when RH is comprised in the sintered body raw material composition, the sintered body raw material composition is preferably
(Y_{0.05}Dy_{0.05}Pr_{0.22}Nd_{0.68})_{14.04}Fe_{79.88}Al_{0.24}Cu_{0.2}Ga_{0.36}Zr_{0.26}Ti_{0.27}B_{5.75}; or
(Y_{0.05}Dy_{0.05}Gd_{0.1}Pr_{0.2}Nd_{0.}6)_{14.04}Fe_{79.88}Al_{0.24}Cu_{0.2}Ga_{0.36}Zr_{0.26}Ti_{0.27}B_{5.75}).

In the present invention, the diffusion source raw material composition can be a conventional alloy powder containing heavy rare earth elements in the art.

Wherein, the heavy rare earth elements preferably comprise Dy and/or Tb.

The atomic percentage of the heavy rare earth element is preferably 50-80 at%; more preferably 60-70 at%.

In the present invention, the diffusion source raw material composition may further comprise M₂; the M₂ preferably comprises one or more of Al, Cu and Ga; more preferably Al and Cu.

Here, the atomic percentage of M₂ is preferably 20-50 at%; more preferably 30-40 at%.

When the M₂ comprises Cu, the atomic percentage of Cu is preferably 10-25 at%; more preferably 15-20 at%.

When the M₂ comprises Al, the atomic percentage of the Al is preferably 10-25 at%; more preferably 15-20 at%.

In the present invention, the diffusion source raw material composition is preferably Dy₇₀Cu₁₅Al₁₅.

In the present invention, the mass ratio of the sintered body raw material composition to the diffusion source raw material composition can be (98-99.5): (0.5-2), preferably 99.2: 0.8.

In the present invention, the diffusion source raw material composition is generally used to form a main phase epitaxial layer.

A third technical solution of the invention provides a preparation method for a magnetic steel containing high-abundance rare earth elements, which comprises the following steps of:
(1) subjecting a sintered body raw material composition for the magnetic steel containing high-abundance rare earth elements to smelting, casting, pulverizing, shaping and sintering to obtain a sintered body;
   wherein the sintering comprises raising a sintering temperature to 1000-1100°C, keeping the temperature for 30-90min, and decreasing the temperature to 900°C;
   the sintering is performed for 2-4 times;
(2) subjecting the sintered body and a diffusion source raw material composition to grain boundary diffusion.

In the present invention, in step (1), preferably, the sintered raw material composition is as described above.

In the present invention, in step (1), the smelting operation and conditions can be conventional smelting processes in the art. Generally, the sintered body raw material composition for the magnetic steel containing high-abundance rare earth elements is smelted and cast by an ingot casting process and a rapid solidification sheet process to obtain an alloy sheet. For example, the smelting is performed in a high-frequency vacuum induction smelting furnace. The vacuum degree of the smelting furnace can be 5×10⁻²Pa. The smelting temperature can be 1500°C or less.

In the present invention, in step (1), the casting process can be a conventional casting process in the art, for example: cooling at a rate of 10²°C/sec-10⁴°C/sec in an Ar gas atmosphere (for example, an Ar gas atmosphere of 5.5×10⁴Pa).

In the present invention, in step (1), the pulverization process can be a conventional pulverization process in the art, preferably including hydrogen decrepitation pulverization and micro-pulverization.

The hydrogen decrepitation pulverization can generally be carried out by hydrogen absorption, dehydrogenation and cooling.

Here, the hydrogen absorption can be carried out under the condition of hydrogen pressure of 0.15MPa.

Here, the dehydrogenation can be carried out under a condition of vacuuming while heating.

The micro-pulverization can be conventional in the art, such as jet-milling pulverization.

Here, the jet mill pulverization can be carried out in a nitrogen atmosphere having an oxidizing gas with a content of 150 ppm or less. The oxidizing gas refers to oxygen or moisture.

Here, the pulverization chamber pressure of the jet-milling pulverization can be 0.38MPa.

Here, the time of the jet-milling pulverization can be 3 hours.

Here, after the pulverization, a lubricant, such as zinc stearate, may be added according to conventional means in the art. The amount of the lubricant added may be 0.10-0.15% of the weight of the mixed powder, such as 0.12%.

In the present invention, in step (1), the shaping process may be a conventional molding process in the art, such as a magnetic field shaping method or a hot pressing and hot deforming method.

Here, the magnetic field strength of the magnetic field shaping method can be 1.5T or more, for example, 1.6T.

Preferably, the magnetic field shaping method comprises subjecting the powder to which zinc stearate has been added to a primary shaping at a forming pressure of 0.35 ton/cm² to obtain a cube with a side length of 25 mm. After the primary forming, demagnetization is performed in a magnetic field of 0.2 T. More preferably, in order to prevent the molded body after the primary shaping from contacting the air, the molded body is sealed and then subjected to a secondary shaping under a pressure of 1.3 ton/cm² by using a secondary molding machine (such as an isostatic pressing machine).

In the present invention, in step (1), the sintering process may be a conventional sintering process in the art, for example, comprising preheating, sintering, and cooling under vacuum conditions (for example, under a vacuum of 5×10⁻³Pa).

Here, the preheating temperature may be 300-600°C. The preheating time may be 1-2h. Preferably, the preheating is performed at 300°C and 600°C for 1h respectively.

Here, the heating method of the sintering is preferably oscillating heating sintering. The operation of the sintering is preferably to raise the sintering temperature to 1080-1090°C, keep the temperature for 60min, and decrease the temperature to 900°C.

Here, the number of sintering is preferably 3 times. Generally, those skilled in the art should understand that when the number of sintering is 3 times, the sintering operation comprises: raising the sintering temperature to 1000-1100°C, maintaining the temperature for 30-90 minutes, and cooling to 900°C, then raising the temperature to 1000-1100°C again, maintaining the temperature for 30-90 minutes, and cooling to 900°C, and finally raising the temperature to 1000-1100°C again, maintaining the temperature for 30-90 minutes, and cooling to 900°C.

Since Y, Er, Yb, Gd, Tm and Sm are heavy rare earths, they have higher melting points than the main phase formed by PrNd. Therefore, when the sintering temperature decreases from 1000-1100°C (especially 1080-1090°C) to 900°C, the main phase containing Y, Er, Yb, Gd, Tm and Sm is cooled first, so that Y, Er, Yb, Gd, Tm and Sm migrate to the center of the main phase, thereby reducing the content of Y, Er, Yb, Gd, Tm and Sm in the main phase outer layer, and forming a distinct main phase center and a distinct main phase outer layer.

Here, the sintering time may be a conventional sintering time in the art, such as 4 hours.

Here, Ar gas may be introduced before cooling to make the gas pressure reach 0.1 MPa. The cooling may be cooling to room temperature (25°C-30°C).

In the present invention, in step (2), the diffusion source raw material composition is as described above.

In the present invention, in step (2), the grain boundary diffusion is carried out in a high-purity Ar gas atmosphere. The pressure of the high-purity Ar gas atmosphere can be conventional in the art, such as 8×10⁻³Pa - 2×10⁵Pa.

The temperature of the grain boundary diffusion can be 800-980°C, such as 900°C.

In the grain boundary diffusion, the time of the grain boundary diffusion is preferably 12-30h, more preferably 15-28h; for example, 24h.

In the present invention, in step (2), after the grain boundary diffusion, an aging heat treatment is further performed according to the conventional practice in the art. The temperature of the aging heat treatment can generally be 440-580°C, for example, 500°C. The time of the aging heat treatment can generally be 2-4h, for example, 4h.

In the present invention, in step (2), after the grain boundary diffusion, the diffusion source raw material composition can form a main phase epitaxial layer.

A fourth technical solution of the invention provides a magnetic steel containing high-abundance rare earth elements, which is prepared by the preparation method for a magnetic steel containing high-abundance rare earth elements as described above.

A fifth technical solution of the invention provides use of the magnetic steel containing high-abundance rare earth elements described above as an electronic component in an electric motor.

On the basis of conforming to the common sense in the art, the above-mentioned preferred conditions can be arbitrarily combined to obtain the preferred embodiments of the present invention.

The reagents and raw materials used in the present invention are commercially available.

The positive and progressive effects of the present invention are as follows:
In the magnetic steel containing high-abundance rare earth elements according to the present invention, the content of high-abundance rare earth elements in the main phase center can be higher than that in the main phase outer layer, and the magnetic properties of the magnetic steel are better. In addition, regarding the magnetic steel containing high-abundance rare earth elements according to the present invention, the main phase outer layer and the main phase epitaxial layer in the main phase can form a composite magnetic hardening shell layer, which is beneficial to improving the magnetic properties of the magnetic steel and improving the utilization rate of the heavy rare earth elements.

According to micromagnetism theory, the impurities or defects on the surface of the grains make the surface of the grains more easily demagnetized, thereby causing the overall demagnetization of the grains. The area closer to the surface of the grains is more easily demagnetized. In order to enhance the anti-demagnetization ability and improve the coercive force of the magnet, the area on the surface of the grain needs to be magnetically strengthened. Regarding the magnetic steel containing high-abundance rare earth elements according to the present invention, the anti-demagnetization ability of the main phase grains gradually weakens from the center to the surface. However, since it has a composite magnetic hardening shell layer with gradually increasing magnetic hardening strength in the main phase grain center, the outer layer, and the epitaxial layer, it can improve the anti-demagnetization ability of the grains while maintaining cost optimization.

### BRIEF DESCRIPTION OF THE DRAWINGS

Fig. 1 shows a schematic diagram of the main phase structure of the magnetic steels containing high-abundance rare earth elements in Examples 1-9.
Fig. 2 shows a SEM image of the magnetic steel containing high-abundance rare earth elements in Example 1.
Fig. 3 shows an element distribution diagram of the magnetic steel containing high-abundance rare earth elements in Example 1.

### DETAILED DESCRIPTION OF THE INVENTION

The present invention is further described below by way of examples, but the present invention is not limited to the scope of the examples. The experimental methods in the following examples without specifying specific conditions are carried out according to conventional methods and conditions, or selected according to the product specifications.

### Example 1

The preparation method for the Y-containing magnetic steel in Example 1 is as follows:
(1) The sintered body raw material composition for the Y-containing magnetic steel in Example 1 is as follows in atomic percentage: (Y_{0.25}Pr_{0.18}Nd_{0.57})_{14.04}Fe_{78.88}Al_{0.24}Cu_{0.2}Ga_{0.36}Zr_{0.26}Ti_{0.27}B_{5.75};

The prepared raw materials were placed in a crucible made of alumina, and vacuum smelted in a high-frequency vacuum induction smelting furnace at a temperature of 1500°C or less in a vacuum of 5×10⁻²Pa. After vacuum melting, Ar gas was introduced into the smelting furnace to make the gas pressure reach 55,000 Pa, and then casting was performed to obtain a rapidly cooled alloy at a cooling rate of 10²°C/second to 10⁴°C/second.

Hydrogen decrepitation pulverization process: The smelting furnace containing the rapidly cooled alloy was evacuated at room temperature. Then, hydrogen with a purity of 99.9% was introduced into the hydrogen decrepitation furnace, and the hydrogen pressure was maintained at 0.15MPa. After sufficient hydrogen absorption, the temperature was raised while vacuuming, and the hydrogen was fully dehydrogenated. After cooling, the powder after hydrogen decrepitation pulverization was removed.

Micro-pulverization process: In a nitrogen atmosphere having an oxidizing gas with a content of 150 ppm or less, the powder after hydrogen decrepitation pulverization was subjected to a jet-milling pulverization for 3 hours under a pulverization chamber pressure of 0.38MPa to obtain a fine powder with an average particle size D50 of 3.0-4.5µm. Oxidizing gas refers to oxygen or moisture.

Zinc stearate was added to the powder after the jet-milling pulverization. The amount of zinc stearate added was 0.12% of the weight of the mixed powder. Then a V-type mixer was used for thorough mixing.

Magnetic field shaping process: By using a right-angle oriented magnetic field shaping machine, the above-mentioned powder with zinc stearate added was subjected to primary shaping to be shaped into a cube with a side length of 25 mm at a forming pressure of 0.35 ton/cm² in an orienting magnetic field of 1.6 T. After the primary shaping, demagnetization was performed in a magnetic field of 0.2T. In order to prevent the molded body from contacting the air after the primary shaping, the molded body was sealed and then a secondary forming machine (an isostatic pressing machine) was used for secondary forming at a pressure of 1.3 ton/cm².

Sintering process (oscillation sintering):
Preheating: The molded body was moved into a sintering furnace and kept at 300°C and 600°C for 1 hour respectively under the vacuum condition of 5×10⁻³Pa;
Sintering for 3 times: the sintering temperature was raised to 1080-1090°C, kept for 60min, and decreased to 900°C; the sintering temperature was raised to 1000-1100°C, kept for 30-90min, and decreased to 900°C; finally, the sintering temperature was raised to 1000-1100°C, kept for 30-90min, and decreased to 900°C;
Cooling: Ar gas was introduced to make the gas pressure reach 0.1 MPa, and then the temperature was reduced to room temperature.

(2) Grain boundary diffusion for the prepared sintered body: The sintered body was processed into a magnet with a diameter of 20 mm and a sheet thickness of less than 7 mm, wherein the thickness direction was the magnetic field orientation direction. After the surface was cleaned, a diffusion source raw material composition (Dy₇₀Cu₁₅Al₁₅) made of a Dy alloy was sprayed fully on the magnet in an spraying amount of 0.8 wt%, wherein the mass ratio of the sintered body raw material composition to the diffusion source raw material composition reached 99.2:0.8. The coated magnet was dried. In a high-purity Ar gas atmosphere, the alloy powder with Dy elements attached to the magnet surface was subjected to diffusion heat treatment at 900°C for 24 hours, and then cooled to room temperature. The diffused magnet was subjected to aging heat treatment, wherein the temperature for the aging heat treatment was 500°C and the duration for the aging heat treatment was 4 hours.

### Example 2

The sintered body raw material composition for the Y-containing magnetic steel in Example 2 is as follows in terms of atomic percentage:

(Y_{0.1}Pr_{0.22}Nd_{0.68})_{14.04}Fe_{79.48}Al_{0.24}Cu_{0.2}Ga_{0.36}Zr_{0.26}Ti_{0.27}B_{5.75};

Other details are the same as those in Example 1.

### Example 3

The sintered body raw material composition for the Y-containing magnetic steel in Example 3 comprised a heavy rare earth element Dy, whose composition in terms of atomic percentage is as follows:

(Y_{0.05}Dy_{0.05}Pr_{0.22}Nd_{0.68})_{14.04}Fe_{79.48}Al_{0.24}Cu_{0.2}Ga_{0.36}Zr_{0.26}Ti_{0.27}B_{5.75};

Other details are the same as those in Example 1.

### Example 4

The sintered body raw material composition for the Y and Gd-containing magnetic steel in Example 4 comprised a heavy rare earth element Dy, whose composition in terms of atomic percentage is as follows:

(Y_{0.05}Dy_{0.05}Gd_{0.1}Pr_{0.2}Nd_{0.6})_{14.04}Fe_{79.48}Al_{0.24}Cu_{0.2}Ga_{0.36}Zr_{0.26}Ti_{0.27}B_{5.75};

Other details are the same as those in Example 1.

### Example 5

The sintered body raw material composition for the Yb-containing magnetic steel in Example 5 is as follows in terms of atomic percentage:

(Yb_{0.25}Pr_{0.18}Nd_{0.57})_{14.04}Fe_{78.88}Al_{0.24}Cu_{0.2}Ga_{0.36}Zr_{0.26}Ti_{0.27}B_{5.75};

Other details are the same as those in Example 1.

### Example 6

The sintered body raw material composition for the Tm-containing magnetic steel in Example 6 is as follows in terms of atomic percentage:

(Tm_{0.25}Pr_{0.18}Nd_{0.57})_{14.04}Fe_{78.88}Al_{0.24}Cu_{0.2}Ga_{0.36}Zr_{0.26}Ti_{0.27}B_{5.75};

Other details are the same as those in Example 1.

### Example 7

The sintered body raw material composition for the Gd-containing magnetic steel in Example 7 is as follows in terms of atomic percentage:

(Gd_{0.25}Pr_{0.18}Nd_{0.57})_{14.04}Fe_{78.88}Al_{0.24}Cu_{0.2}Ga_{0.36}Zr_{0.26}Ti_{0.27}B_{5.75};

Other details are the same as those in Example 1.

### Example 8

The sintered body raw material composition for the Sm-containing magnetic steel in Example 8 is as follows in terms of atomic percentage:

(Sm_{0.25}Pr_{0.18}Nd_{0.57})_{14.04}Fe_{78.88}Al_{0.24}Cu_{0.2}Ga_{0.36}Zr_{0.26}Ti_{0.27}B_{5.75};

Other details are the same as those in Example 1.

### Example 9

The sintered body raw material composition for the Er-containing magnetic steel in Example 9 is as follows in terms of atomic percentage:

(Er_{0.25}Pr_{0.18}Nd_{0.57})_{14.04}Fe_{78.88}Al_{0.24}Cu_{0.2}Ga_{0.36}Zr_{0.26}Ti_{0.27}B_{5.75};

Other details are the same as those in Example 1.

### Example 10

The sintered body raw material composition for the Yb-containing magnetic steel in Example 10 is as follows in terms of atomic percentage:

(Yb_{0.1}Pr_{0.22}Nd_{0.68})_{14.04}Fe78_{.88}Al_{0.24}Cu_{0.2}Ga_{0.36}Zr_{0.26}Ti_{0.27}B_{5.75};

Other details are the same as those in Example 1.

### Example 11

The sintered body raw material composition for the Tm-containing magnetic steel in Example 11 is as follows in terms of atomic percentage:

(Tm_{0.1}Pr_{0.22}Nd_{0.68})_{14.04}Fe_{78.88}Al_{0.24}Cu_{0.2}Ga_{0.36}Zr_{0.26}Ti_{0.27}B_{5.75};

Other details are the same as those in Example 1.

### Example 12

The sintered body raw material composition for the Gd-containing magnetic steel in Example 12 is as follows in terms of atomic percentage:

(Gd_{0.1}Pr_{0.22}Nd_{0.68})_{14.04}Fe_{78.88}Al_{0.24}Cu_{0.2}Ga_{0.36}Zr_{0.26}Ti_{0.27}B_{5.75};

Other details are the same as those in Example 1.

### Example 13

The sintered body raw material composition for the Sm-containing magnetic steel in Example 13 is as follows in terms of atomic percentage:

(Sm_{0.1}Pr_{0.22}Nd_{0.68})_{14.04}Fe_{78.88}Al_{0.24}Cu_{0.2}Ga_{0.36}Zr_{0.26}Ti_{0.27}B_{5.75};

Other details are the same as those in Example 1.

### Example 14

The sintered body raw material composition for the Er-containing magnetic steel in Example 14 is as follows in terms of atomic percentage:

(Er_{0.1}Pr_{0.22}Nd_{0.68})_{14.04}Fe_{78.88}Al_{0.24}Cu_{0.2}Ga_{0.36}Zr_{0.26}Ti_{0.27}B_{5.75};

Other details are the same as those in Example 1.

### Comparative Example 1

The sintered body raw material composition for the Y-containing magnetic steel in Comparative Example 1 is as follows in terms of atomic percentage:

(Y_{0.4}Pr_{0.18}Nd_{0.57})_{14.04}Fe_{78.88}Al_{0.24}Cu_{0.2}Ga_{0.36}Zr_{0.26}Ti_{0.27}B_{5.75};

Other details are the same as those in Example 1.

### Comparative Example 2

The sintered body raw material composition for the Y-containing magnetic steel in Comparative Example 2 is as follows in terms of atomic percentage:

(Y_{0.4}Pr_{0.18}Nd_{0.57})_{13.5}Fe_{78.88}Al_{0.5}Cu_{0.2}Ga_{0.36}Zr_{0.26}Ti_{0.27}B_{5.75};

Other details are the same as those in Example 1.

### Effect Example 1

### 1. Characterization of microstructure

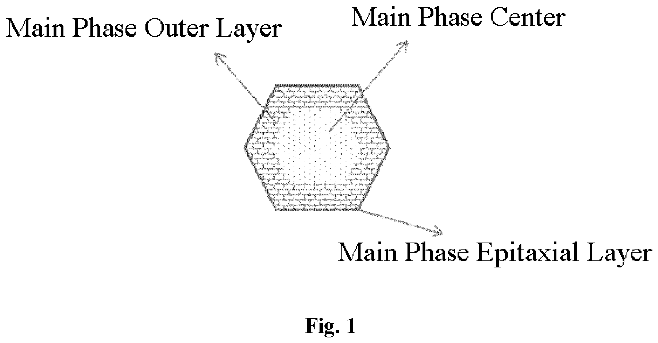

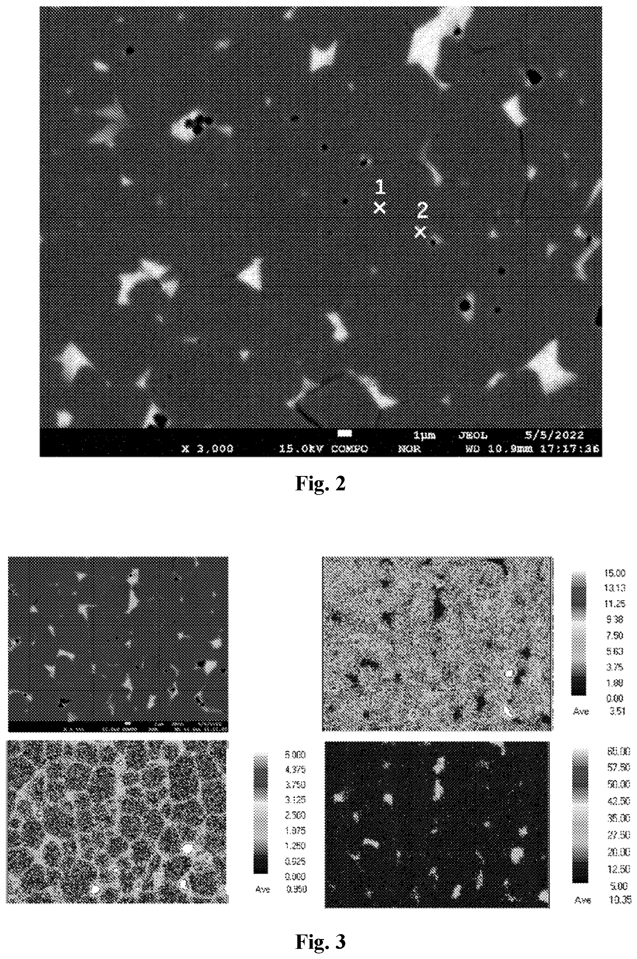

(1) The structural schematic diagram of the main phase in the magnetic steels containing high abundance rare earth elements of Examples 1-14 and Comparative Examples 1-2 is shown in Fig. 1.
(2) Using the SEM and point analysis functions of a field emission electron probe microanalyzer EPMA, the rare earth contents (in atomic percentage) of the main phase center (the black area in Fig. 2, marked by "1") and the main phase outer layer (the gray area in Fig. 2, marked by "2") of themagnetic steel containing high-abundance rare earth elements in Example 1 (SEM image shown in Fig. 2) was tested. The results are shown in Table 1.

**Table 1**

| | Pr+Nd (at%) | Y (at%) | Y / (Pr+Nd) |
|---|---|---|---|
| Main Phase Center | 9.63 | 2.69 | 0.28 |
| Main Phase Outer Layer | 9.91 | 2.28 | 0.23 |

In addition, according to Fig. 2, the area of the main phase center region (i.e., the black area in Fig. 2) accounts for about 35%-50% of the main phase area.
(3) The thickness of the main phase epitaxial layer of the magnetic steel containing high-abundance rare earth elements and the content of heavy rare earth elements in the main phase epitaxial layer of the magnetic steel containing high-abundance rare earth elements in Example 1 were tested by using a field emission electron probe microanalyzer EPMA surface distribution test. The results are shown in Fig. 3. The test results are as follows: the thickness of the main phase epitaxial layer is less than 0.5 µm, and the content of Dy is 2.5 wt%, wherein wt% refers to the mass percentage of Dy in the magnetic steel containing high-abundance rare earth elements.

According to the results of the EPMA surface distribution test, the average diameter R of the main phase, the diameter r₁ of the main phase center, the average thickness r₂ of the main phase outer layer and the main phase epitaxial layer were measured. The specific method is as follows:
By combining the system scale in the EPMA surface distribution test results and the "Particle Size Distribution Calculation Version 1.2" software, the average diameter R of the main phase and the average diameter r₁ of the main phase center are measured. The numbers for measurements were 20. Since the grains had irregular shapes, the sizes of the larger and smaller directions of a single grain were measured respectively, and by calculating their average value, the average diameter R of the main phase and the average diameter r₁ of the main phase center can be obtained. The results are shown in Table 2 below.

The average thickness r₂ of the main phase outer layer can be calculated by the average diameter R of the main phase and the average diameter r₁ of the main phase center, specifically: the average thickness r₂ of the main phase outer layer = (the average diameter R of the main phase - the average diameter r₁ of the main phase center) / 2. The results of r₂ are shown in Table 2.

### Average thickness r₃ of the main phase epitaxial layer

According to the EPMA surface distribution test results, the shell thickness of Dy in the Dy surface distribution can be obtained, and the average thickness r₃ of the main phase epitaxial layer can be calculated from it, specifically: The average thickness r₃ of the main phase epitaxial layer = the shell thickness of Dy in the Dy surface distribution/2. The results of r₃ are shown in Table 2.

**Table 2**

| | Average Diameter R of Main Phase (µm) | Average Diameter r₁ of Main Phase Center (nm) | Average Thickness r₂ of Main Phase Outer Layer (nm) | r₁/r₂ | Average Thickness r3 of Main Phase Epitaxial Layer (nm) |
|---|---|---|---|---|---|
| Example 1 | 4.3 | 2.9 | 0.7 | 4.14 | 320 |
| Example 2 | 4.7 | 2.8 | 0.9 | 3.11 | 350 |
| Example 3 | 4.4 | 2.1 | 1.1 | 1.91 | 270 |
| Example 4 | 4.6 | 2.3 | 1.2 | 1.92 | 270 |
| Example 5 | 5.3 | 2.7 | 1.3 | 2.08 | 300 |
| Example 6 | 4.5 | 2.7 | 0.9 | 3 | 260 |
| Example 7 | 4.7 | 2.1 | 1.3 | 1.62 | 240 |
| Example 8 | 5.0 | 3.1 | 1 | 3.1 | 270 |
| Example 9 | 5.8 | 3.2 | 1.3 | 2.46 | 250 |
| Comparative Example 1 | 5.6 | 4.2 | 0.7 | 6 | 250 |

### 2. Characterization of magnetic properties

The magnetic properties of the magnetic steels containing high-abundance rare earth elements before and after diffusion in Examples 1-14 and Comparative Examples 1-2 were tested by using a permanent magnet material testing system NIM-62000. The test results are shown in Table 3 below.

| | | Remanence Br(kGs) | Coercive Force Hcj(kOe) | Maximum Magnetic Energy Product Bhmax (MGoe) | Squareness Hk/Hcj (%) |
|---|---|---|---|---|---|
| Example 1 | Before Diffusion | 13.75 | 8.5 | 28.65 | 98.2 |
| | After Diffusion | 13.58 | 17 | 45.67 | 96.6 |
| Example 2 | Before Diffusion | 13.76 | 13.82 | 45.87 | 98.4 |
| | After Diffusion | 13.53 | 22.45 | 44.46 | 96.5 |
| Example 3 | Before Diffusion | 13.57 | 15.08 | 45.02 | 98.4 |
| | After Diffusion | 13.42 | 24.85 | 43.73 | 96.1 |
| Example 4 | Before Diffusion | 13.22 | 14.82 | 41.51 | 97.8 |
| | After Diffusion | 12.96 | 24.31 | 30.89 | 96.3 |
| Example 5 | Before Diffusion | 12.95 | 6.9 | 20.55 | 92.1 |
| | After Diffusion | 12.72 | 15.7 | 36.41 | 90.6 |
| Example 6 | Before Diffusion | 13.42 | 8 | 25.76 | 95.6 |
| | After Diffusion | 13.19 | 16.7 | 41.32 | 96.2 |
| Example 7 | Before Diffusion | 13.07 | 9.8 | 30.42 | 94.8 |
| | After Diffusion | 12.83 | 18.4 | 39.68 | 96.7 |
| Example 8 | Before Diffusion | 13.94 | 4 | 12.53 | 78.2 |
| | After Diffusion | 13.71 | 9.3 | 28.55 | 83.1 |
| Example 9 | Before Diffusion | 13.45 | 9.2 | 29.69 | 96.1 |
| | After Diffusion | 13.21 | 17.5 | 41.47 | 96.5 |
| Example 10 | Before Diffusion | 13.55 | 11.96 | 38.22 | 92.1 |
| | After Diffusion | 13.29 | 20.73 | 40.01 | 90.6 |
| Example 11 | Before Diffusion | 13.7 | 12.74 | 41.85 | 95.6 |
| | After Diffusion | 13.57 | 21.51 | 42.91 | 96.2 |
| Example 12 | Before Diffusion | 13.65 | 15.37 | 44.15 | 94.8 |
| | After Diffusion | 13.41 | 23.88 | 43.27 | 96.7 |
| Example 13 | Before Diffusion | 13.44 | 9.35 | 30.42 | 78.2 |
| | After Diffusion | 13.25 | 17.57 | 37.74 | 83.1 |
| Example 14 | Before Diffusion | 13.62 | 14.26 | 43.35 | 96.1 |
| | After Diffusion | 13.47 | 22.17 | 42.47 | 96.5 |
| Comparative Example 1 | Before Diffusion | 13.51 | 3.4 | 10.21 | 82.8 |
| | After Diffusion | 13.26 | 10.1 | 36.92 | 85.6 |
| Comparative Example 2 | Before Diffusion | 13.25 | 3.9 | 10.9 | 82.8 |
| | After Diffusion | 13.08 | 10.6 | 32.66 | 85.6 |

As can be seen from the above tables, in the sintered body raw material composition for the Y-containing magnetic steel in Comparative Example 1, the atomic percentage of Y (5.62 at%) and r1/r2 are not within the protection scope of this application. Accordingly, the remanence, coercive force, maximum magnetic energy product and squareness of Comparative Example 1 are significantly worse than those of Example 1.

In the sintered body raw material composition for the Y-containing magnetic steel in Comparative Example 2, the atomic percentage of Y (5.4 at%) is not within the protection scope of this application. Accordingly, the remanence, coercive force, maximum magnetic energy product and squareness of Comparative Example 2 are significantly worse than those of Example 1.

## Claims

1. A magnetic steel containing high-abundance rare earth elements, **characterized in that** a main phase of the magnetic steel containing high-abundance rare earth elements comprises a main phase center, a main phase outer layer and a main phase epitaxial layer; the main phase outer layer is located on an outer side of the main phase center and completely covers the main phase center; the main phase epitaxial layer is located on an outer side of the main phase outer layer and completely covers the main phase outer layer;
wherein a content of a high-abundance rare earth element RE₁ in the main phase center is A₁ at%, wherein at% refers to an atomic percentage of the high-abundance rare earth element in the main phase center in the magnetic steel containing high-abundance rare earth elements;
a content of a high-abundance rare earth element RE₂ in the main phase outer layer is A₂ at%, wherein at% refers to an atomic percentage of the high-abundance rare earth element in the main phase outer layer in the magnetic steel containing high-abundance rare earth elements;
A₁ at% > A₂ at%;
wherein the main phase center has an average diameter of r₁, and the main phase outer layer has an average thickness of r₂, 1 <r₁/r₂ < 5;
wherein the main phase epitaxial layer comprises a heavy rare earth element RH; and the main phase epitaxial layer has an average thickness of r₃, 2nm<r₃<500nm.

2. The magnetic steel containing high-abundance rare earth elements according to claim 1, **characterized in that** the magnetic steel containing high-abundance rare earth elements satisfies one or more of the following conditions a to l:
a. the main phase center comprises a light rare earth element RL₁, and the light rare earth element RL₁ comprises the high-abundance rare earth element RE₁;
in the main phase center, the light rare earth element RL₁ preferably comprises Pr and/or Nd; the light rare earth element RL₁ has an atomic percentage of preferably 9.0 at%-10.0 at%, such as 9.63 at%;
b. in the main phase center, the high-abundance rare earth element RE₁ has an atomic percentage of of 0.5 at%-3.0 at%, preferably 2.0 at%-3.0 at%, such as 2.69 at%;
c. the main phase outer layer comprises a light rare earth element RL₂, and the light rare earth element RL₂ comprises the high-abundance rare earth element RE₂;
in the main phase outer layer, the light rare earth element RL₂ preferably comprises Pr and/or Nd; the light rare earth element RL₂ has an atomic percentage of preferably 9.0 at%-10.0 at%, such as 9.91 at%;
d. the high-abundance rare earth element RE₁ in the main phase center and the high-abundance rare earth element RE₂ in the main phase outer layer independently comprise one or more of La, Ce, Y, Er, Yb, Gd, Tm and Sm, preferably comprise Y, Yb, Gd, Tm or Sm;
e. in the main phase outer layer, the high-abundance rare earth element RE₂ has an atomic percentage of 0.5 at%-3.0 at%, preferably 2.0 at%-3.0 at%, for example 2.28 at%;
f. the main phase has an average diameter of R, 2µm<R<15µm;
g. the main phase center has an average diameter of r₁, and the main phase outer layer has an average thickness of r₂, and r₁/r₂ is 2-4, for example, 3;
h. the main phase epitaxial layer has an average thickness of r₃, and r₃ is 100-400nm, for example, 200-300nm;
i. in the main phase epitaxial layer, the heavy rare earth element RH comprises Dy and/or Tb;
j. in the main phase epitaxial layer, the heavy rare earth element RH has a content of 2.5 wt%, wherein the wt% refers to a mass percentage of the heavy rare earth element RH in the magnetic steel containing high-abundance rare earth elements;
k. the magnetic steel containing high-abundance rare earth elements further comprises a grain boundary phase; the grain boundary phase preferably comprises Fe, Al, Cu, Ga, Zr, Ti and B;
l. the anisotropy fields of the main phase epitaxial layer, the main phase center and the main phase outer layer decrease in sequence;
preferably, the magnetic steel containing high-abundance rare earth elements satisfies conditions a-l at the same time.

3. A magnetic steel containing high-abundance rare earth elements, **characterized in that** the magnetic steel containing high-abundance rare earth elements comprises a sintered body raw material composition and a diffusion source raw material composition,
wherein the sintered body raw material composition comprises the following components in atomic percentage of:
RE: 0.65-3.6 at%; RE is a high-abundance rare earth element, comprising one or more of La, Ce, Y, Er, Yb, Gd, Tm and Sm;
RL: 10-12.7 at%; RL is a light rare earth element, comprising Pr and/or Nd;
Fe: 78-80 at%;
M₁: 0.7-0.9 at%; M₁ comprises one or more of Al, Cu and Ga;
N: 0.4-0.6 at%; N comprises Zr and/or Ti;
B: 5.5-6.5 at%.

4. The magnetic steel containing high-abundance rare earth elements according to claim 3, **characterized in that** the magnetic steel containing high-abundance rare earth elements satisfies one or more of the following conditions i-xi:
i. the sintered body raw material composition further comprises RH, wherein RH is a heavy rare earth element, preferably comprising Dy and/or Tb; RH has an atomic percentage of preferably 0-0.1 at% excluding 0 at%, such as 0.05 at%;
ii. in the sintered raw material composition, RE has an atomic percentage of 0.7-3.55 at%, such as 0.702 at%, 1.404 at%, 2.106 at% or 3.51 at%;
when the RE comprises Y, the Y has an atomic percentage of preferably 0.7-3.51 at%, such as 0.702 at%, 1.404 at%, 2.106 at% or 3.51 at%;
when the RE comprises Gd, the Gd has an atomic percentage of preferably 1.0-3.55 at%, such as 1.404 at% or 3.51 at%;
when the RE comprises Yb, Tm, Sm or Er, the Yb, Tm, Sm or Er has an atomic percentage of preferably 3-3.55 at% independently, such as 3.51 at%;
the RE preferably comprises Y, Yb, Er, Gd, Tm or Sm;
iii. in the sintered body raw material composition, the RL has an atomic percentage of 10.5-12.65 at%, such as 10.53 at%, 11.232 at% or 12.636 at%;
when the RL comprises Pr, the Pr has an atomic percentage of preferably 0.15-0.25 at%, such as 0.18 at%, 0.2 at% or 0.22 at%;
when the RL comprises Nd, the Nd has an atomic percentage of preferably 0.5-0.7 at%, such as 0.57 at%, 0.6 at% or 0.68 at%;
iv. the RL comprises Pr and Nd;
the RL preferably comprises 0.18 at% Pr and 0.57 at% Nd, or preferably comprises 0.2 at% Pr and 0.6 at% Nd, or preferably comprises 0.22 at% Pr and 0.68 at% Nd;
v. in the sintered body raw material composition, the Fe has an atomic percentage of 78.5-79.5 at%, such as 78.88 at% or 79.48 at%;
vi. in the sintered body raw material composition, the M₁ has an atomic percentage of 0.75-0.85 at%, such as 0.8 at%;
when the M₁ comprises Al, the Al has an atomic percentage of preferably 0.2-0.3 at%, such as 0.24 at%;
when the M₁ comprises Cu, the Cu has an atomic percentage of preferably 0.15-0.25 at%, such as 0.2 at%;
when the M₁ comprises Ga, the Ga has an atomic percentage of preferably 0.3-0.4 at%, such as 0.36 at%;
vii. the M₁ comprises Al, Cu and Ga, preferably comprises 0.24 at% Al, 0.2 at% Cu and 0.36 at% Ga;
viii. in the sintered body raw material composition, the N has an atomic percentage of 0.45-0.55 at%, such as 0.53 at%;
when the N comprises Zr, the Zr has an atomic percentage of preferably 0.2-0.3 at%, such as 0.26 at%;
when the N comprises Ti, the Ti has an atomic percentage of preferably 0.2-0.3 at%, such as 0.27 at%;
ix. the N comprises Zr and Ti, preferably 0.26 at% Zr and 0.27 at% Ti;
x. in the sintered body raw material composition, the B has an atomic percentage of 5.5-6.0 at%, for example, 5.75 at%;
xi. the sintered body raw material composition is:
(Y_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Y_{0.1}Pr_{0.22}Nd_{0.68})_{14.04}Fe_{79.48}Al_{0.24}Cu_{0.2}Ga_{0.36}Zr_{0.26}Ti_{0.27}B_{5.75}; or
(Yb_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Tm_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Gd_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Sm_{0.25}Pr_{0.18}Nd_{0.57})_{14.04}Fe_{78.88}Al_{0.24}Cu_{0.2}Ga_{0.36}Zr_{0.26}Ti_{0.27}B_{5.75}; or
(Er_{0.25}Pr_{0.18}Nd_{0.57)14.04}Fe_{78.88}Al_{0.24}Cu_{0.2}Ga_{0.36}Zr_{0.26}Ti_{0.27}B_{5.75}; or
(Yb_{0.1}Pr_{0.22}Nd_{0.68})_{14.04}Fe78_{.88}Al_{0.24}Cu_{0.2}Ga_{0.36}Zr_{0.26}Ti_{0.27}B_{5.75}; or
(Tm_{0.1}Pr_{0.22}Nd_{0.68})_{14.04}Fe_{78.88}Al_{0.24}Cu_{0.2}Ga_{0.36}Zr_{0.26}Ti_{0.27}B_{5.75}; or
(Gd_{0.1}Pr_{0.22}Nd_{0.68})_{14.04}Fe_{78.88}Al_{0.24}Cu_{0.2}Ga_{0.36}Zr_{0.26}Ti_{0.27}B_{5.75}; or
(Sm_{0.1}Pr_{0.22}Nd_{0.68})_{14.04}Fe_{78.88}Al_{0.24}Cu_{0.2}Ga_{0.36}Zr_{0.26}Ti_{0.27}B_{5.75}; or
(Er_{0.1}Pr_{0.22}Nd_{0.68})_{14.04}Fe_{78.88}Al_{0.24}Cu_{0.2}Ga_{0.36}Zr_{0.26}Ti_{0.27}B_{5.75};
when the sintered body raw material composition comprises RH, the sintered body raw material composition is
(Y_{0.05}Dy_{0.05}Pr_{0.22}Nd_{0.68})_{14.04}Fe_{79.48}Al_{0.24}Cu_{0.2}Ga_{0.36}Zr_{0.26}Ti_{0.27}B_{5.75}; or
(Y_{0.05}Dy_{0.05}Gd_{0.1}Pr_{0.2}Nd_{0.6})_{14.04}Fe_{79.48}Al_{0.24}Cu_{0.2}Ga_{0.36}Zr_{0.26}Ti_{0.27}B_{5.75}),
preferably, the magnetic steel containing high-abundance rare earth elements satisfies conditions i-xi at the same time.

5. The magnetic steel containing high-abundance rare earth elements according to claim 3, **characterized in that** the magnetic steel containing high-abundance rare earth elements satisfies one or more of the following conditions I-IV:
I. the diffusion source raw material composition is an alloy powder containing a heavy rare earth element;
wherein the heavy rare earth element preferably comprises Dy and/or Tb;
the heavy rare earth element has an atomic percentage of preferably 50-80 at%, more preferably 60-70 at%;
II. the diffusion source raw material composition further comprises M₂; the M₂ preferably comprises one or more of Al, Cu and Ga, more preferably Al and Cu;
wherein the M₂ has an atomic percentage of preferably 20-50 at%, more preferably 30-40 at%;
when the M₂ comprises Cu, the Cu has an atomic percentage of preferably 10-25 at%, more preferably 15-20 at%;
when the M₂ comprises Al, the Al has an atomic percentage of preferably 10-25 at%, more preferably 15-20 at%;
III. the diffusion source raw material composition is Dy₇₀Cu₁₅Al₁₅;
IV. a mass ratio of the sintered body raw material composition to the diffusion source raw material composition is (98-99.5):(0.5-2), preferably 99.2:0.8;
preferably, the magnetic steel containing high-abundance rare earth elements satisfies conditions I-IV at the same time.

6. A preparation method for a magnetic steel containing high-abundance rare earth elements, **characterized in that** the preparation method for a magnetic steel containing high-abundance rare earth elements comprises following steps of:
(1) subjecting a sintered body raw material composition for the magnetic steel containing high-abundance rare earth elements to smelting, casting, pulverizing, shaping and sintering to obtain a sintered body;
wherein the sintering comprises raising a sintering temperature to 1000-1100°C, keeping the temperature for 30-90min, and decreasing the temperature to 900°C;
the sintering is performed for 2-4 times;
(2) subjecting the sintered body and a diffusion source raw material composition to grain boundary diffusion.

7. The preparation method for a magnetic steel containing high-abundance rare earth elements according to claim 6, **characterized in that** the preparation method for the magnetic steel containing high-abundance rare earth elements satisfies one or more of the following conditions ① to ⑤:
① in step (1), the smelting comprises subjecting the sintered body raw material composition for the magnetic steel containing high-abundance rare earth elements to smelting and casting by an ingot casting process and a rapid solidification sheet process to obtain an alloy sheet;
② in step (1), the casting comprises cooling at a rate of 10²°C/sec-10⁴°C/sec in an Ar gas atmosphere;
③ in step (1), the pulverizing comprises hydrogen decrepitation pulverization and micro-pulverization;
wherein the hydrogen decrepitation pulverization preferably comprises hydrogen absorption, dehydrogenation and cooling;
wherein the micro-pulverization is preferably jet-milling pulverization;
the jet-milling pulverization is preferably carried out in a nitrogen atmosphere having an oxidizing gas with a content of 150 ppm or less;
the jet-milling pulverization is performed at a pulverization chamber pressure of preferably 0.38 MPa;
the jet-milling pulverization is performed for a time of preferably 3 hours;
④ in step (1), the shaping is preferably performed by a magnetic field shaping method or a hot pressing and hot deforming method;
wherein, the magnetic field shaping method is performed at a magnetic field strength of preferably 1.5T or more, for example, 1.6T;
⑤ in step (1), the process of the sintering comprises preheating, sintering and cooling under vacuum conditions;
wherein the preheating is performed at a temperature of preferably 300-600°C; the preheating is performed for a time of preferably 1-2h; more preferably, the preheating is performed at a temperature of 300°C and 600°C for 1h respectively;
wherein the sintering is performed preferably by oscillating heating sintering; the sintering preferably comprises raising a sintering temperature to 1080-1090°C, keeping the temperature for 60min, and reducing the temperature to 900°C;
wherein the sintering is preferably performed for 3 times;
wherein the sintering is performed for a time of preferably 4h;
preferably, the preparation method for the magnetic steel containing high-abundance rare earth elements satisfies conditions ①~⑤ at the same time.

8. The preparation method for a magnetic steel containing high-abundance rare earth elements according to claim 6, **characterized in that** the preparation method for the magnetic steel containing high-abundance rare earth elements satisfies one or more of the following conditions ⑥ to ⑨:
⑥ in step (2), the grain boundary diffusion is carried out in a high-purity Ar gas atmosphere; the high-purity Ar gas atmosphere has a pressure of preferably 8×10⁻³Pa-2×10⁵Pa;
⑦ the grain boundary diffusion is performed at a temperature of preferably 800-980°C, for example, 900°C;
⑧ in the grain boundary diffusion, the grain boundary diffusion is performed for a time of 12-30h, preferably 15-28h; for example 24h;
⑨ in step (2), after the grain boundary diffusion, the preparation method further comprises an aging heat treatment; the aging heat treatment is performed at a temperature of preferably 440-580°C, such as 500°C; the aging heat treatment is performed for a time of preferably 2-4h, such as 4h;
preferably, the preparation method for the magnetic steel containing high-abundance rare earth elements satisfies conditions ⑥ to ⑨ at the same time.

9. A magnetic steel containing high-abundance rare earth elements, **characterized in that** the magnetic steel containing high-abundance rare earth elements is prepared by the preparation method for a magnetic steel containing high-abundance rare earth elements according to any one of claims 6-8.

10. Use of a magnetic steel containing high-abundance rare earth elements as an electronic component in an electric motor, **characterized in that** the magnetic steel containing high-abundance rare earth elements is as defined in claim 9.
